# EUROPÄISCHE PATENTANMELDUNG

(11) **EP 1 208 971 A1**
(43) Veröffentlichungstag der Anmeldung: **29.05.2002**
(21) Anmeldenummer: 01126656.6
(22) Anmeldetag: 08.11.2001
(51) Int. Cl.: B41C 1/02, B44B 3/00, B23Q 11/00

(54) **Einrichtung zur Absaugung von Bearbeitungsrückständen**

(30) Priorität: 21.11.2000 DE 10057688
(71) Anmelder: Heidelberger Druckmaschinen Aktiengesellschaft, 69115 Heidelberg (DE)
(72) Erfinder: Angelbeck, Rolf, 24159 Kiel (DE); Beisswenger, Siegfried Dr., 24211 Preetz (DE)

(57) **Zusammenfassung**

Die Erfindung betrifft eine Einrichtung zur Absaugung von Bearbeitungsrückständen für eine Bearbeitungsvorrichtung mit mehreren, vorzugsweise entlang einer Bearbeitungsstrecke bewegbaren Bearbeitungseinheiten, insbesondere für eine Graviermaschine mit mehreren Graviersupporten (3), bei der jeder Bearbeitungseinheit eine Eintrittsöffnung einer Absaugleitung zugeordnet ist.

Die erfindungsgemäße Einrichtung zeichnet sich aus durch eine Sammelleitung für die Absaugung.

Dazu ist vorzugsweise die Sammelleitung als Absaugkanal (2) ausgebildet und jede der Absaugleitungen weist an ihrem der Bearbeitungseinheit abgewandten Ende ein Mundstück (12) auf, das in den Absaugkanal mündet, und zwar bevorzugt in einen Eintrittsschlitz (10) des Absaugkanals, wobei es entlang und in diesem Eintrittsschlitz bewegbar ist.

## Beschreibung

Die Erfindung betrifft eine Einrichtung zur Absaugung von Bearbeitungsrückständen für eine Bearbeitungsvorrichtung mit mehreren, vorzugsweise entlang einer Bearbeitungsstrecke bewegbaren Bearbeitungseinheiten, insbesondere für eine Graviermaschine mit mehreren Graviersupporten, bei der jeder Bearbeitungseinheit eine Eintrittsöffnung einer Absaugleitung zugeordnet ist.

Bei Bearbeitungsvorrichtungen der oben genannten Art, insbesondere bei Graviermaschinen, z. B. für das Gravieren von Druckformzylindern für den Tiefdruck, ist es üblich, jede Bearbeitungseinheit über eine Absaugleitung, normalerweise einen Absaugschlauch, mit einer Art Staubsauger zu verbinden, um Bearbeitungsrückstände, bspw. Staub oder Gase, aus dem Arbeitsbereich abzusaugen. Insbesondere dann, wenn die Bearbeitungseinheiten entlang einer Bearbeitungsstrecke bewegbar sind, ist es platzraubend und umständlich, diese Absaugleitungen in Kabelketten oder dergl. zu führen. Außerdem sind dann so lange Absaugleitungen notwendig, daß unter Umständen nur noch etwa die halbe Saugleistung des Staubsaugers an der Absaugseite der Absaugleitungen wirkt.

Der Erfindung liegt daher die Aufgabe zugrunde, eine Einrichtung der eingangs genannten Gattung zu verbessern, insbesondere ökonomischer und stringenter zu konzipieren.

Diese Aufgabe wird erfindungsgemäß durch eine Sammelleitung für die Absaugung gelöst.

Es wird also erfindungsgemäß eine Sammelleitung vorgesehen, so daß die Luftführung mit Vorteil gebündelt bzw. konzentriert erfolgen kann und bspw. auch zentral und raumsparend bzw. raumgünstig angeordnet werden kann. Dadurch kann zudem auch eine maximale Saugleistung ausgenutzt werden, da die Sammelleitung einen großzügig bemessenen Querschnitt aufweisen kann, der mit einem Staubsauger verbunden wird, so daß ein entsprechend guter Durchfluß gewährleistet ist.

Eine nächste Weiterbildung der Erfindung sieht vor, daß die Sammelleitung als Absaugkanal ausgebildet ist und jede der Absaugleitungen an ihrem der Bearbeitungseinheit abgewandten Ende ein Mundstück aufweist, das in den Absaugkanal mündet.

Ein solcher Absaugkanal kann zentral und platzgünstig angeordnet und verlegt werden, und auch für die Absaugleitungen sind Zugänge dazu in Form der Mundstücke positionsgerecht anordbar. Auch ein neuer, zusätzlicher Anschluß oder ein Austausch von Teilen ist bei der erfindungsgemäßen Anordnung in vorteilhafter Weise möglich.

Zudem können die Mundstücke entlang des Absaugkanales bewegt werden, wie dies eine nächste Weiterbildung der Erfindung vorsieht. Die Mundstücke können dann eine Bewegung der Bearbeitungseinheiten, insbesondere von Graviersupporten einer Graviermaschine, nachvollziehen, so daß Absaug-Verbindungsschläuche zwischen einem Mundstück und einer Bearbeitungseinheit nicht auf gekrümmten Wegen nachgeführt werden müssen, sondern eine im wesentlichen geradlinige, direkte und relativ kurze Verbindung bilden können, was für die Ausgestaltung der Einrichtung und deren effektive Saugleistung günstig ist.

Dazu kann beispielsweise jedes Mundstück in einen Eintrittsschlitz oder -spalt des Absaugkanales münden und entlang dieses Eintrittsschlitzes bewegbar sein.

Damit trotz der genannten Bewegbarkeit der Eintrittsschlitz zur Vermeidung von Nebenluft im wesentlichen immer über seine Länge geschlossen ist, können ihn elastische Dichtlippen verschließen, wie es eine bevorzugte Ausführungsform der Erfindung vorsieht. Nur jeweils die Mundstücke ragen dann zur Öffnung der Dichtlippen zwischen diesen durch. Dieser Öffnungsbereich der Dichtlippen an den Mundstücken wandert bei einer Bewegung der Mundstücke mit diesen mit. In Bewegungsrichtung vor dem jeweiligen Mundstück bleiben die Dichtlippen geschlossen, hinter dem Mundstück schließen sich die Dichtlippen aufgrund ihrer Elastizität wieder selbsttätig. Das Verschließen der Dichtlippen kann durch ein dem jeweiligen Mundstück vor- und/oder nachlaufendes Verschließelement unterstützt werden. Hierfür können Rollelemente vorgesehen sein, die entlang der Dichtlippen abrollen.

Das Aufspreizen und Öffnen der Dichtlippen bei einer Bewegung des Mundstückes kann durch die Formgebung des Mundstückes begünstigt werden, indem z. B. das Mundstück Ausläufer aufweist, die in die mögliche Bewegungsrichtung weisen. Ein solcher Ausläufer kann insbesondere im wesentlichen keilförmig sein, so daß das Mundstück in seinem Querschnitt bspw. etwa schiffchenförmig gestaltet ist.

Die erfindungsgemäßen Dichtlippen können vorzugsweise Hohlkammern, insbesondere schlauchförmige Hohlkammern, aufweisen, die mit einem Medium, vorzugsweise mit Preßluft, gebläht bzw. aufgeblasen werden können, um Dichtwirkung, sogar mit einem einstellbaren Preßdruck, zu entfalten.

Gemäß einer nächsten Weiterbildung der Erfindung ist vorgesehen, daß die Bearbeitungseinheiten entlang eines Trägers bewegbar sind und daß an oder in diesem Träger auch zentral und geschützt und nahe der sich bewegenden Bearbeitungseinheiten die Sammelleitung angeordnet ist, beispielsweise als ein in ein Trägerhohlprofil integrierter Absaugkanal ausgebildet ist.

Ausführungsbeispiele, aus denen sich auch erfinderische Merkmale ergeben, auf die aber die Erfindung nicht beschränkt ist, sind in der Zeichnung dargestellt. Es zeigen schematisch:
- Fig. 1: einen Querschnitt einer erfindungsgemäß ausgerüsteten Graviermaschine für die Gravur von Tiefdruck-Formzylindern,
- Fig. 2: eine Draufsicht auf die Graviermaschine gemäß Fig. 1,
- Fig. 3: eine Ausschnittvergrößerung aus dem Querschnitt gemäß Fig. 1,
- Fig. 4: einen Querschnitt eines zwischen Dichtlippen eintauchenden Mundstückes von oben,
- Fig. 5: einen Abschnitt des Mundstückes und seiner Umgebung gemäß Fig. 4 in einer Seitenansicht,
- Fig. 6: den Abschnitt des Mundstückes gemäß Fig. 5 in einer Stirnansicht und
- Fig. 7: ein zweites Ausführungsbeispiel von Dichtlippen.

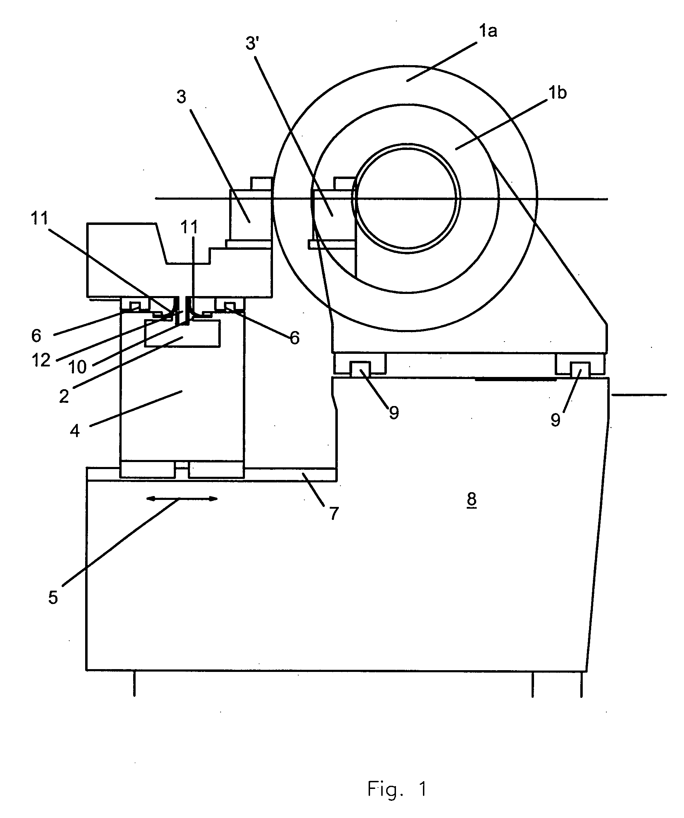

Fig. 1 zeigt einen Querschnitt einer Graviermaschine für die Gravur von Tiefdruck-Formzylindern 1a, 1b, die erfindungsgemäß mit einem zentralen Absaugkanal 2, parallel zu den Druckformzylindern, ausgerüstet ist.

Die Graviermaschine umfaßt nur schematisch angedeutete Graviersupporte 3, 3', die auf einem Träger 4, in dem der Absaugkanal 2 integriert ist, in die Zeichenebene hinein und aus der Zeichenebene heraus entlang der Druckformzylinder 1a, 1b auf Schienen 6 verschiebbar sind und die mit dem Träger 4 in Richtung eines Doppelpfeiles 5 auf Schienen 7 an die Druckformzylinder 1a, 1b zustellbar sind. Gezeigt sind alternativ mögliche Druckformzylinder 1a, 1b mit beispielhaften, unterschiedlichen Durchmessern und zwei dementsprechende Stellungen 3, 3' der Graviersupporte.

Der Träger 4 und die Druckformzylinder 1a, 1b sind auf einem Maschinen-Untergestell 8 gelagert, wobei auch die Druckformzylinder 1a, 1b auf Schienen 9 in ihrer Axialrichtung verschiebbar angeordnet sind.

Aus der Fig. 1 ist zudem entnehmbar, daß der Absaugkanal 2 an seiner Oberseite einen Eintrittsschlitz 10 aufweist, der über seine Länge verläuft und der mit Dichtlippen 11 verschlossen ist, zwischen denen Mundstücke 12 durchragen und in den Absaugkanal 2 einragen.

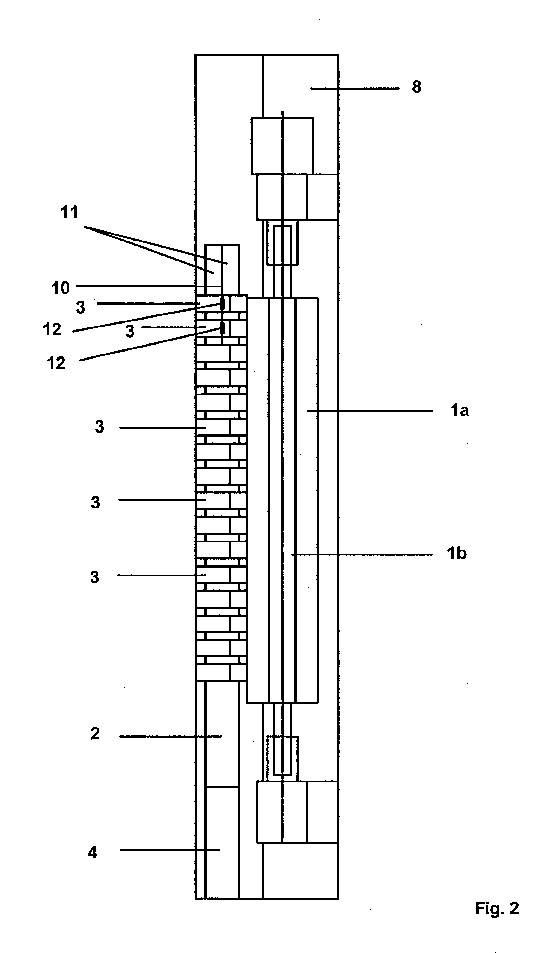

Fig. 2 zeigt eine Draufsicht auf die Graviermaschine gemäß Fig. 1 in einer der Übersichtlichkeit halber weiter vereinfachten und schematisierten Form. Gleiche Bauelemente sind in der Fig. 2 mit den gleichen Bezugszahlen bezeichnet wie in Fig.1.

Über die Figur 1 hinaus, sind in der Figur 2 insbesondere bei zweien der in Reihe entlang des Druckformzylinders 1a, 1b angeordneten Graviersupporte 3 Mundstücke 2 angedeutet, die zwischen den Dichtlippen 11 in den Eintrittsschlitz 10 des Absaugkanals 2 einragen und dabei die Dichtlippen 11 auseinanderspreizen. Mit der Bewegung der Graviersupporte auf dem Träger 4 entlang des Druckformzylinders 1a oder 1b verschieben sich die Mundstücke in dem Eintrittsschlitz 10 in dessen Längsrichtung.

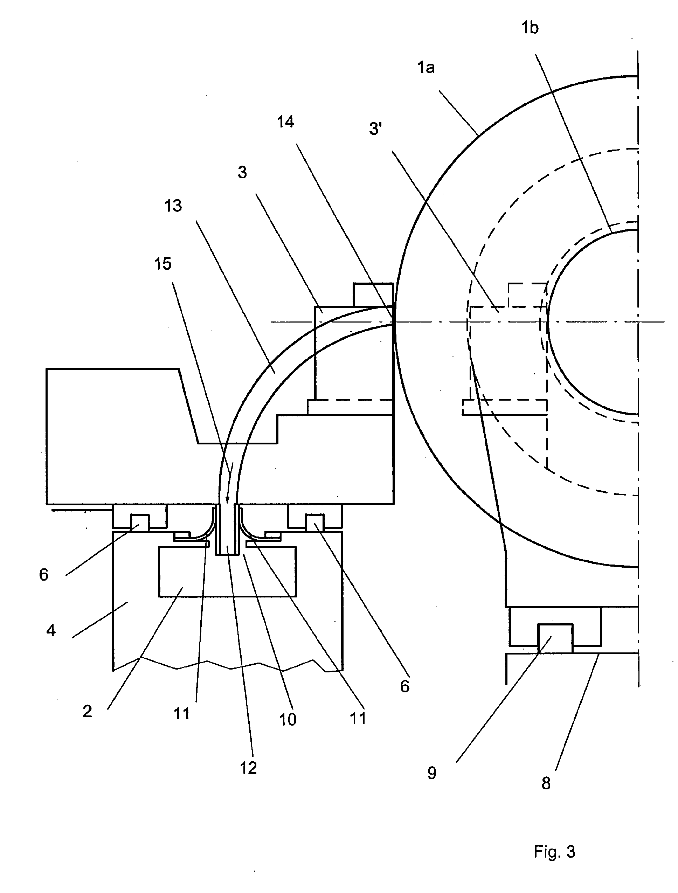

In Fig. 3 ist eine Ausschnittvergrößerung der Fig.1 dargestellt, in der wiederum die gleichen Bauelemente mit den gleichen Bezugszahlen bezeichnet ist wie in den vorhergehenden Figuren.

Insbesondere ist in der Fig. 3 der Bereich eines in den Absaugkanal 2 einragenden Mundstückes 12 detailierter und genauer zu erkennen. Angedeutet ist, ebenfalls wieder nur schematisch und prinzipiell, ein Verbindungschlauch 13 zwischen einem Graviersupport 3 und dem Mundstück 12. Der Verbindungsschlauch 13 hat seine Eintrittsöffnung 14 im Bereich des Graviersupportes 3 in der Nähe des zu bearbeitenden Bereiches des Druckformzylinders 1a oder 1b, aus dem er Rückstände jeglicher Art, die beim Gravieren anfallen, also insbesondere Staub und Gase, in Richtung des Pfeiles 15 durch das Mundstück 12 in den zentralen Absaugkanal absaugt, der für alle Graviersupporte gleichermaßen über relativ kurze und direkte Verbindungsschläuche 13 zugänglich ist. Der Absaugkanal 2 selbst kann an einer seiner Stirnseiten an einen Schlauch mit relativ großem Querschnitt angeschlossen werden, der zu einer Gebläseeinrichtung oder dergleichen führt.

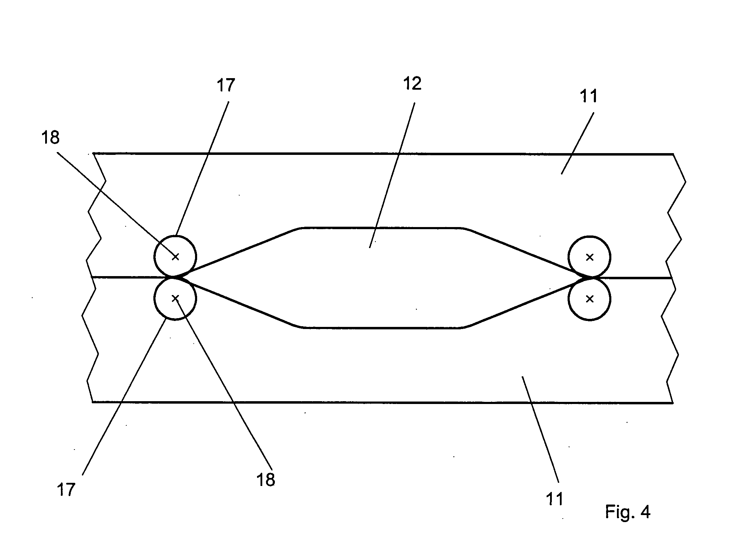

Die Fig. 4 bis 6 zeigen einmal im Querschnitt, einmal in einer Seitenansicht und einmal in einer Stirnansicht einen Bereich eines Mundstückes 12 in seiner Umgebung und in einer gegenüber der Darstellung der Fig. 3 weiter vergrößerten Ansicht.

In der Fig. 4 ist erkennbar, wie die Dichtlippen 11 den darunter befindlichen Eintrittsschlitz 10 des Absaugkanals 2 verschließen, aber von dem Mundstück 12 auseinandergespreizt werden. Für eine Verbesserung des Spreizvorganges ist das Mundstück in seinem Querschnitt etwa schiffchenförmig mit im wesentlichen keilförmigen Ausläufern 16 ausgebildet. Zudem sind Rollelemente 17 mit ihren Achslinien 18 angedeutet, die als Verschließelemente zum Zusammenhalten oder Zusammendrücken der Dichtlippen 11 vor und hinter dem Mundstück 12 fungieren.

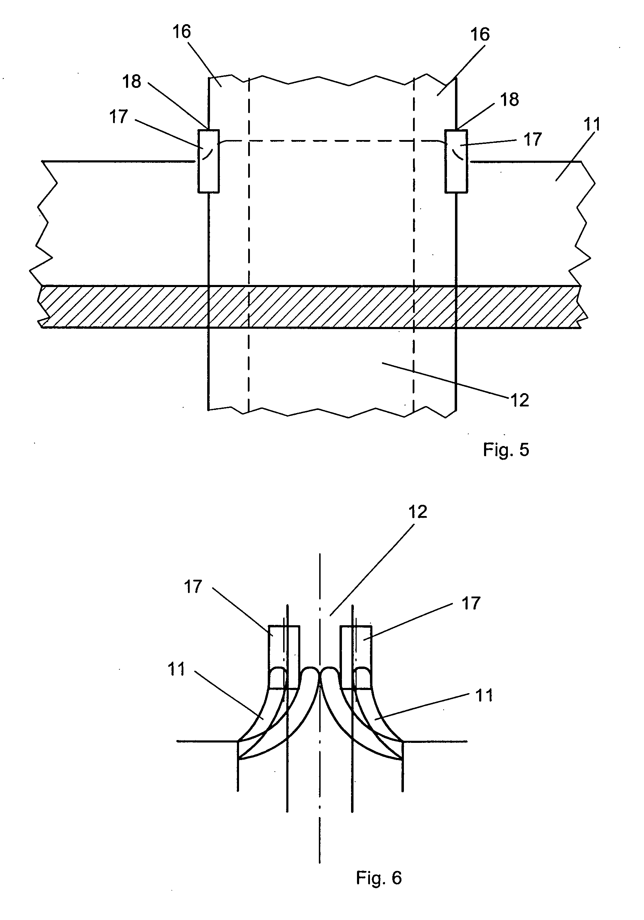

In der Fig. 5 ist das Aufwölben der Dichtlippen 11 beim Auseinanderspreizen und die Verschlußfunktion der Rollelemente 17 deutlich zu erkennen.

Noch deutlicher ist die Verschlußfunktion der Rollelemente 17 in der Stirnansicht gemäß Fig. 6 zu erkennen.

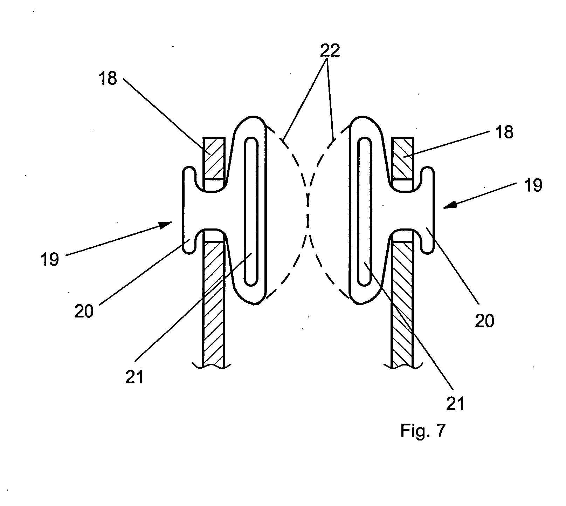

Fig. 7 zeigt einen Querschnitt eines Eintrittsschlitzes von dem obere Wandungsabschnitte 18 angedeutet sind. In diesen Wandungsabschnitten 18 sind jeweils Dichtlippen 19 mit ihren Füßen 20 verankert. Die in Fig. 7 dargestellten Dichtlippen 19 weisen einander zugewandte Hohlkammern 21 auf, die sich schlauchförmig in Längsrichtung der Dichtlippen 19 und des Eintrittsschlitzes erstrecken. Diese Hohlkammern 21 sind, wie mit gestrichelten Linien 22 angedeutet, mit einem Medium blähbar, insbesondere mit Preßluft aufblasbar, bis sie dichtend mit einem gewissen Anpressdruck aneinanderliegen.

## Patentansprüche

1. Einrichtung zur Absaugung von Bearbeitungsrückständen für eine Bearbeitungsvorrichtung mit mehreren, vorzugsweise entlang einer Bearbeitungsstrecke bewegbaren Bearbeitungseinheiten, insbesondere für eine Graviermaschine mit mehreren Graviersupporten, bei der jeder Bearbeitungseinheit eine Eintrittsöffnung einer Absaugleitung zugeordnet ist,
**gekennzeichnet durch**
eine Sammelleitung für die Absaugung.

2. Einrichtung nach Anspruch 1, **dadurch gekennzeichnet, daß** die Sammelleitung als Absaugkanal (2) ausgebildet ist und jede der Absaugleitungen (13) an ihrem der Bearbeitungseinheit abgewandten Ende ein Mundstück (12) aufweist, das in den Absaugkanal (2) mündet.

3. Einrichtung nach Anspruch 2, **dadurch gekennzeichnet, daß** das Mundstück (12) in einen Eintrittsschlitz oder -spalt (10) des Absaugkanales (2) mündet und entlang dieses Eintrittsschlitzes (10) bewegbar ist.

4. Einrichtung nach Anspruch 3, **dadurch gekennzeichnet, daß** der Eintrittsschlitz (10) mit elastischen Dichtlippen (11, 19) verdeckt ist, zwischen denen das Mundstück (12) durchragt.

5. Einrichtung nach Anspruch 4, **dadurch gekennzeichnet, daß** das Mundstück (12) Ausläufer (16) in Richtung der Erstreckung des Eintrittsschlitzes (10) zur Aufspreizung der Dichtlippen (11, 19) aufweist.

6. Einrichtung nach Anspruch 4 oder 5, **gekennzeichnet durch** wenigstens ein dem Mundstück (12) vor- oder nachlaufendes Verschließelement für ein Verschließen der Dichtlippen (11) außerhalb des Bereiches des Mundstückes (12).

7. Einrichtung nach Anspruch 6, **dadurch gekennzeichnet, daß** das Verschließelement entlang der Dichtlippen (11) rollende Rollelemente (17) umfaßt.

8. Einrichtung nach einem der Ansprüche 4 oder 5, **dadurch gekennzeichnet, daß** die Dichtlippen (19) jeweils wenigstens eine Hohlkammer (21) aufweisen, die mittels eines Mediums blähbar ist.

9. Einrichtung nach Anspruch 8, **dadurch gekennzeichnet, daß** die Hohlkammer (21) eine sich in Längsrichtung der Dichtlippe (19) erstreckende Schlauchform aufweist.

10. Einrichtung nach einem der vorhergehenden Ansprüche, **dadurch gekennzeichnet, daß** die Bearbeitungseinheiten (3, 3') entlang eines Trägers (4) bewegbar sind und daß die Sammelleitung an oder in diesem Träger (4) angeordnet ist.
